# EUROPÄISCHE PATENTANMELDUNG

(11) **EP 3 647 983 A1**
(43) Veröffentlichungstag der Anmeldung: **06.05.2020**
(21) Anmeldenummer: 18203394.4
(22) Anmeldetag: 30.10.2018
(51) Int. Cl.: G06F 21/57, H04W 12/10

(54) **VORRICHTUNG UND BETRIEBSVERFAHREN ZUM ÜBERPRÜFEN VON BETRIEBSDATEN EINER GESICHERTEN START-BETRIEBSPHASE EINES INSBESONDERE IN EINER INDUSTRIELLEN ANLAGENUMGEBUNG VERWENDBAREN GERÄTES**

(71) Anmelder: Siemens Aktiengesellschaft, 80333 München (DE)
(72) Erfinder: Falk, Rainer, 85586 Poing (DE); Feist, Christian Peter, 80689 München (DE)

(57) **Zusammenfassung**

Die Erfindung beansprucht eine Vorrichtung (V) zum Überprüfen von Betriebsdaten einer gesicherten Start-Betriebsphase eines insbesondere in einer industriellen Anlagenumgebung verwendbaren Gerätes aufweisend:
- eine Erfassungseinheit (ES, TS, VS, CM), die dazu ausgelegt ist, die Betriebsdaten während der gesicherten Start-Betriebsphase zu erfassen und,
- eine Aufzeichnungseinheit (SB), die dazu ausgelegt ist, diese Betriebsdaten aufzuzeichnen,
- eine Vergleichseinheit, die dazu ausgelegt ist, während der Start-Betriebsphase den Inhalt der erfassten Betriebsdaten mit dem Inhalt von vorgebbaren ersten Referenz-Daten zu vergleichen und bei Zulässigkeit des Vergleichsergebnisses eine zweite Betriebsphase zu aktivieren, und
- eine weitere oder dieselbe Vergleichseinheit, die dazu ausgelegt ist, den Inhalt dieser aufgezeichneten Betriebsdaten mit dem Inhalt von vorgebbaren zweiten Referenz-Daten während der zweiten Betriebsphase zu vergleichen, und
- eine Ausgabeeinheit, die dazu ausgelegt ist, eine zumindest eine Folgemaßnahme einleitenden Nachricht abhängig vom Vergleichsergebnis während der Start-Betriebsphase und/oder vom Vergleichsergebnis während der zweiten Betriebsphase auszugeben.

## Beschreibung

Die Erfindung betrifft zum Überprüfen von Betriebsdaten einer gesicherten Start-Betriebsphase eines insbesondere in einer industriellen Anlagenumgebung verwendbaren Gerätes.

Es besteht ein Bedarf, um mit IT-Security-Mechanismen Produkte, beispielsweise Geräte (z.B. Steuereinheiten/-geräte, Internet-der-Dinge (IoT)-Geräte), Gerätekomponenten oder Softwarekomponenten, vor Manipulationen und/oder einem Reverse Engineering zu schützen. Kryptographische IT-Security-Mechanismen sind bereits beispielsweise in Smart Devices, beispielsweise in Geräten des Internets der Dinge (IoT), von cyberphysikalischen Systemen, von Automatisierungssystemen oder von Fertigungssystemen, der Betriebstechnik und von anderen Anlagen in Einsatz.

Der Begriff "Security" bzw. "Sicherheit" bezieht sich im Rahmen der vorliegenden Beschreibung im Wesentlichen auf die Sicherheit bzw. Schutz, Vertraulichkeit und/oder Integrität von Daten sowie deren Übertragung und auch Sicherheit, Vertraulichkeit und/oder Integrität beim Zugriff auf entsprechende Daten. Auch die Authentifizierung bei Datenübertragungen beziehungsweise beim Datenzugriff gehört zum Begriff "Sicherheit", wie er im Rahmen der vorliegenden Beschreibung verwendet wird. Ein Modul kann hierbei als eine Hardware- und/oder Funktionseinheit, die software- und/oder firmwaremäßig ausgestaltet sein kann, ausgeprägt sein. Die Funktion kann beispielsweise mittels eines Prozessors und/oder einer Speichereinheit zum Speichern von Programmbefehlen ausgeführt werden.

Manipulationsgeschützt geht in der vorliegenden Beschreibung über den Begriff "Security" hinaus. Hierbei werden nicht nur die genannten kryptographischen bzw. Security-Methoden eingesetzt, sondern auch die Datenübertragung verlässlich gegen Angriffe bzw. Fremdzugriffe von außen sichergestellt.

Industrielle Geräte, z.B. Steuergeräte, Feldgeräte, IoT-Geräte oder IoT-Gateways, verwenden eine Mehrzahl von kryptographischen Schlüsseln, z.B. um sich zu authentisieren, um Integrität von gespeicherten Daten und Programmcode zu schützen, um Firmware-Updates zu prüfen und zu entschlüsseln und um die Integrität und ggf. die Vertraulichkeit von Projektierungs- und Konfigurationsdaten zu schützen. Um Daten, vor allem Steuerdaten, zu übertragen, können die genannten Geräte mit einer Datenschnittstelle ausgestattet sein, die drahtgebunden als auch als Drahtlos-Schnittstelle, z.B. eine WLAN-, eine Bluetooth- oder eine NFC-Schnittstelle (NFC: Near Field Communication) ausgebildet und eingerichtet sein kann. Mit Hilfe dieser Datenschnittstelle kann das Gerät an ein Netzwerk angebunden werden bzw. mit anderen Geräten kommunizieren.

Bei kritischen IT-Systemen und Steuerungssystemen, insbesondere wenn sie in einer industriellen Automatisierungsumgebung eingesetzt werden, muss die Integrität im Betrieb gewährleistet werden. Dazu kann zum einen beim Startvorgang geprüft werden, dass tatsächlich zugelassene Software geladen wird (Secure Boot, Verified Boot), bzw. es kann ermittelt werden, welche Software geladen wurde (Trusted Boot, Measured Boot).

Die Firmware von eingebetteten Systemen, speziell industriellen Steuergeräten, und ihre Bestandteile können von einem Angreifer manipuliert und durch schadhafte Komponenten ersetzt werden. Dies kann von einem Angreifer mit physikalischem Zugriff, beispielsweise durch Austauschen des Flash-Speichers, oder einem Remote-Angreifer, beispielsweise durch Austauschen des Betriebssystem-Kernels im Dateisystem, durchgeführt werden.

Gängige Gegenmaßnahmen, wie beispielsweise Secure Boot, verwenden typischerweise kryptographische Prüfsummen (z.B. digitale Signatur) um sicherzustellen, dass nur unveränderte und vertrauenswürdige Firmware ausgeführt wird. Allerdings können solche Mechanismen durch gezielte Fehlerinjektion (engl. Fault injection) umgangen werden. Hierbei kann z.B. der Prozessor zum Zeitpunkt der Überprüfung der Firmware durch ein elektromagnetisches Signal so gestört werden, dass eine falsche Firmware-Signatur nicht erkannt oder ignoriert wird, d.h. dass trotz ungültiger Firmware der Bootvorgang fortgesetzt wird. Demnach kann schadhafte Software trotzdem ausgeführt werden.

Es besteht ein Bedarf an einem verbesserten und flexibel reagierbaren Startvorgang gegebenenfalls mit einer zusätzlichen Geräteintegritätsüberprüfung nach dem Startvorgang.

Es ist Aufgabe der vorliegenden Erfindung, Verfahren und Vor- bzw. Einrichtungen bzw. Einheiten mit gegenüber dem oben genannten Stand der Technik insbesondere im Umfeld der Automatisierung zu verbessern.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Die Erfindung beansprucht eine Vorrichtung, insbesondere eine Steuereinheit, zum Überprüfen von Betriebsdaten einer gesicherten Start-Betriebsphase eines insbesondere in einer industriellen Anlagenumgebung verwendbaren Gerätes aufweisend:
- eine Erfassungseinheit, die dazu ausgelegt ist, die Betriebsdaten während der gesicherten Start-Betriebsphase zu messen bzw. zu erfassen,
- eine Aufzeichnungseinheit, die dazu ausgelegt ist, diese Betriebsdaten gegebenenfalls manipulationsgeschützt aufzuzeichnen,
- eine Vergleichseinheit, die dazu ausgelegt ist, während der Start-Betriebsphase den Inhalt der erfassten Betriebsdaten mit dem Inhalt von vorgebbaren ersten Referenz-Daten zu vergleichen und bei Zulässigkeit des Vergleichsergebnisses eine zweite Betriebsphase zu aktivieren, und

- eine weitere oder dieselbe Vergleichseinheit, die dazu ausgelegt ist, den Inhalt dieser aufgezeichneten Betriebsdaten mit dem Inhalt von vorgebbaren zweiten Referenz-Daten während der zweiten Betriebsphase zu vergleichen, und
- eine Ausgabeeinheit, die dazu ausgelegt ist, eine zumindest eine Folgemaßnahme einleitenden Nachricht abhängig vom Vergleichsergebnis während der Start-Betriebsphase und/oder vom Vergleichsergebnis während der zweiten Betriebsphase auszugeben.

Die Überprüfung kann abgestuft durchgeführt werden, d.h. die erste Betriebsphase ist in mehrere Stufen unterteilt. In jeder dieser Stufen wird dann eine Überprüfung der genannten Betriebsdaten durchgeführt. Wenn das Vergleichs- bzw. Überprüfungsergebnis positiv ist, dann findet ein Übergang von der ersten Betriebsphase in die zweite Betriebsphase, inbesondere in eine operative Betriebsphase, statt. In dieser zweiten Betriebsphase wird dann eine Überprüfung der genannten Betriebsdaten durchgeführt.

Wenn das Überprüfungsergebnis negativ ist, dann wird als Folgemaßnahme z.B. eine Errormeldung etc. ausgegeben bzw. kein Übergang zu dem zweiten Betriebsmodus bzw. Sperren von Interfaces etc. durchgeführt.

In einer Ausführungsform der Erfindung repräsentieren die erfassten Betriebsdaten vor allem Sicherheitsbetriebsdaten, die Sicherheitsbetriebsdaten umfassen. Die Betriebsdaten umfassen in der Regel kritischen Parameter insbesondere die Signaturprüfung einer geladenen Firmware und die Überwachung von Tamper-Sensoren. Diese können auch eines oder mehrere der folgenden, jeweils zumindest einmal während der ersten Betriebsphase erfassten Datenelemente umfassen: Versorgungsspannungspegel der CPU oder des Geräts, Stromverbrauch der CPU oder des Geräts, Taktsignalinformation der CPU, Temperatur, Helligkeitswert, Näherungssensorwert, Eindringsensorwert, Gehäuseschaltersignal, Strahlungsmesswert, Firmware-Hash-Wert, Firmware-Signatur, Firmware-Signaturprüfungsergebnis, zur Signaturprüfung verwendetes digitales Zertifikat, Selbsttestergebnis.
Die Betriebsdaten betreffen in der Regel Umgebungsparameter der Vorrichtung.

Dabei kann die Erfassungseinheit als Messeinheit z.B. integriert oder angebracht an einen solchen Temper-Sensor ausgestaltet sein.

Diese aufgezeichneten Daten können in ein Log-Protokoll in Echtzeit oder zu einem späteren Zeitpunkt eingetragen worden sein.

Die industrielle Anlage kann eine Automatisierungsanlage, Fertigungs-/Produktionsanlage, Energieanlage etc. sein.

Erfindungsgemäß werden die kritischen Parameter einer ersten Betriebsphase, die als Secure Boot oder Verified Boot ausgestaltet sein kann, gesichert bzw. manipulationsgeschützt mitprotokolliert, sodass die erste Betriebsphase zu einem späteren Zeitpunkt nachprüfbar ist bzw. zusätzliche Überprüfungen erfolgen können. Dies hat den Vorteil, dass die eigentliche Secure Boot Phase relativ starr konfiguriert sein kann, während eine komplexe Secure-Boot-Policy flexibel definiert und ggf. aktualisiert werden kann. Dies ist insbesondere vorteilhaft bei einem Secure Boot, das durch eine Hardware einer CPU erfolgt. In der Praxis ist vor allem eine erste Stufe der ersten Betriebsphase sehr unflexibel, da sie nur entsprechend der unveränderbaren Chip-Konfiguration erfolgt. Die Erfindung ermöglicht, dass während der ersten Betriebsphase eine "grobe", starre Prüfung des geschützten Startvorgangs erfolgt. Dazu wird eine erste, grobe Referenz-Policy bzw. Referenzdaten verwendet. Anhand des erfassten Secure-Boot-Protokolls des geschützten Startvorgangs erfolgt zu einem späteren Zeitpunkt während der zweiten Betriebsphase eine weitere Prüfung ("Nachprüfung") des geschützten Startvorgangs der ersten Betriebsphase. Dazu wird eine zweite, feinere, anpassbare Referenz-Policy bzw. Referenzdaten verwendet.

Um Manipulationsversuchen beispielsweise invasive physikalische Eingriffe wie z.B. fault-injection, auf einen Startvorgang entgegenzuwirken, wird der Startvorgang von Chips (z.B. CPUs) mit Tampersensoren und redundanten Überprüfungen so erweitert werden, dass Manipulationen mittels invasiver, physikalischer Methoden verhindert oder erkannt werden können. Eine Überwachung, insbesondere durch die Integration (intern und/oder extern) von gegebenenfalls konfigurierbaren Tampersensoren, ist während des Startvorgangs normalerweise noch nicht aktiv. Diese muss im Laufe eines Startvorgangs initialisiert und konfiguriert werden. Erst ab diesem Zeitpunkt ist sie aktiv geschaltet.
Durch das Erzeugen einer Aufzeichnung (Log-Datei/Protokoll), die die erforderlichen Daten - beim Einsatz von Tampersensoren die Sensorwerte - enthält, lässt sich ein konkreter Rückschluss auf eine fehlgeschlagene Überprüfung oder erkannte Manipulation ziehen.
Dies kann zu einer Verbesserung hinsichtlich der Sicherheit und Nachhaltigkeit von Geräten/ Produkten beitragen.

Eine Weiterbildung der Erfindung sieht vor, dass, wenn das Vergleichsergebnis eine Abweichung der aufgezeichneten Daten mit den Referenz-Daten repräsentiert, die Nachricht einen Alarm, einen Neustart, ein Löschen von Daten, ein Signal eines Anzeigeelements (z.B. Leuchten einer Warnleuchte/Diode) und/oder ein Herstellen oder Unterbrechen einer elektrischen Verbindung für die Folgemaßnahme einleiten kann.

Diese Referenz-Daten können über eine sogenannte Policy (Richtlinie), beim Einsatz von Tampersensoren über die Sensoren-Policy, definiert werden. Diese Policy umfasst erlaubte (Schwell-)Werte bzw. Intervalle. Weicht einer der zu überprüfenden Daten von den erlaubten Werten ab (z.B. Schwellwert, Intervall, zu hohe Fluktuation), so kann von einer möglichen Manipulation ausgegangen werden. Die Police kann konfigurierbar sein und eine Information zur Reaktion auf das Erkennen einer Abweichung enthalten.

Eine Weiterbildung der Erfindung sieht vor, dass, wenn das Vergleichsergebnis eine Übereinstimmung der aufgezeichneten Betriebsdaten mit den Referenz-Daten repräsentiert, eine Bestätigungsnachricht ausgegeben werden kann. Bei Übereinstimmung kann eine Abweichung zu einem vorgebbaren Grad (Wert liegt innerhalb eines Tolleranzintervalls bzw. unterhalb/oberhalb eines vorgebbaren Schwellenwertes) toleriert werden.

Eine Weiterbildung der Erfindung sieht vor, dass die erfassten Betriebsdaten kryptographisch aufgezeichnet und/oder gespeichert werden bzw. sind. Dies kann durch eine laufende kryptographische Prüfsumme erfolgen.

Eine Weiterbildung der Erfindung sieht vor, dass Teile der kryptographisch aufgezeichneten und/oder gespeicherten Betriebsdaten oder die kryptographisch aufgezeichneten und/oder gespeicherten Daten vollständig auf Gültigkeit übergeprüft werden.

Eine Weiterbildung der Erfindung sieht vor, dass die aufgezeichneten und/oder gespeicherten Betriebsdaten als Ganzes kryptographisch durch eine Signatur abgesichert werden, welche von der Recheneinheit (CPU) der Vorrichtung erstellbar ist oder erstellt wird.

Eine Weiterbildung der Erfindung sieht vor, dass der private Signaturschlüssel fest "verdrahtet" in die Recheneinheit oder einmalig konfigurierbar in der Recheneinheit hinterlegt ist. Dazu können z.B. ein OTP-Speicher (OTP: one-time programmable), ein EEPROM oder Security Fuses verwendet werden.

Ein weiterer Aspekt der Erfindung ist ein Betriebsverfahren zum Überprüfen von Betriebsdaten einer gesicherten Start-Betriebsphase eines insbesondere in einer industriellen Anlagenumgebung verwendbaren Gerätes; aufweisend folgende Schritte:
a) Erfassen (1) der Betriebsdaten während der gesicherten Start-Betriebsphase und,
b) Aufzeichnen dieser Betriebsdaten (6),
c) Vergleichen (4) während der Start-Betriebsphase des Inhalts der erfassten Betriebsdaten mit dem Inhalt von vorgebbaren ersten Referenz-Daten und Aktivieren einer zweiten Betriebsphase bei Zulässigkeit des Vergleichsergebnisses, und
d) Vergleichen des Inhalts dieser aufgezeichneten Betriebsdaten mit dem Inhalt von vorgebbaren zweiten Referenz-Daten während der zweiten Betriebsphase, und
e) Ausgeben einer zumindest eine Folgemaßnahme einleitenden Nachricht (7) abhängig vom Vergleichsergebnis während der Start-Betriebsphase und/oder vom Vergleichsergebnis während der zweiten Betriebsphase.

Ist das Vergleichsergebnis positiv, dann können die oben genannten Verfahrensschritte wiederholt werden. Bei negativen Vergleichsergebnis folgt z.B. eine Errormeldung etc. bzw. kein Übergang zu einem operativen Betriebsmodus bzw. ein Sperren von Schnittstellen/Interfaces etc.

Die Schritte a) bis c) sind wiederholbar oder werden optional wiederholt. Wenn in Schritt c) eine Übereinstimmung (bis zu einem bestimmten Grad) der genannten Inhalte festgestellt wird, können die Schritte a) bis c) wiederholt werden. Es können auch alle Verfahrensschritte wiederholt werden. Durch jede Wiederholung könnte eine nächste Stufe der Start-Betriebsphase erreicht werden. Wenn keine Übereinstimmung festgestellt wird bzw. die Überprüfung fehlgeschlagen ist, kann eine Non-Enforcing ("Audit") Betriebsphase eingeleitet werden, so dass die genannten Schritte auch wiederholt werden können, wobei die Betriebsdaten nur aufgezeichnet werden.

Des Weiteren ist ein Computerprogramm(produkt) umfassend Programm-Code vorgesehen, der von mindestens einem Prozessor ausgeführt werden kann und der bewirkt, dass der mindestens eine Prozessor das erfindungsgemäße (Betriebs-)Verfahren und dessen Ausführungsformen ausführt. Das Computerprogramm kann auf einer Vorrichtung der vorstehend genannten Art ablaufen oder als Computerprogrammprodukt auf einem computerlesbaren Medium gespeichert sein.

Zusätzlich kann eine Variante des Computerprogramm(produktes) mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine sein.

Das Verfahren und Computerprogramm(produkte) können entsprechend der Weiterbildungen/Ausführungsformen der vorgenannten Vorrichtung und deren Weiterbildungen/Ausführungsformen ausgebildet sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigt in schematischer Darstellung:
Figur 1 Funktionsblöcke der erfindungsgemäßen Vorrichtung, die als Steuereinheit bzw. -gerät ausgestaltet sein kann,
Figur 2 einen Mechanismus für einen gesicherten Startvorgang mit Aufzeichnung und Überprüfung von Sensor-Daten, und
Figur 3 erfindungsgemäßes Betriebsverfahren anhand eines Ablaufdiagramms.

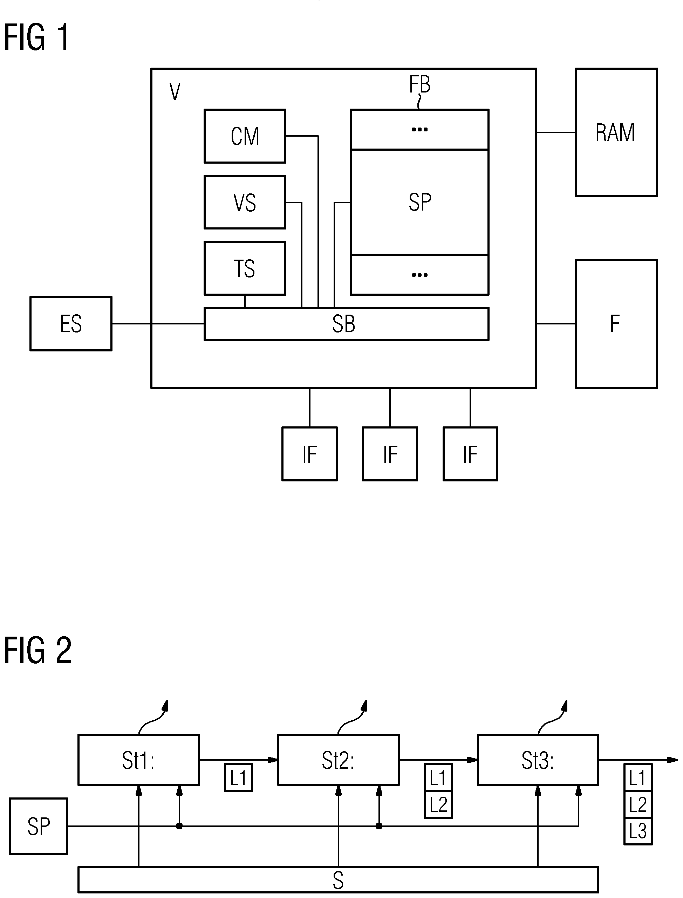

Figur 1 zeigt Funktionsblöcke der erfindungsgemäßen Vorrichtung V, die als Steuereinheit, z.B. als CPU, bzw. Gerät ausgestaltet sein kann.

Die CPU besitzt hierbei mehrere verschiedene Tampersensoren TS (Sicherungssensoren sowie einen. SpannungsSensor VS, einen Takt-Monitor CM, und einen Temperatursensor z.B. der externe Sensor ES), sowie dedizierte Fuses FB für die Sensor-Policy SP (Sensor-Richtlinie). Neben extern angeschlossenem Arbeitsspeicher RAM und einem Flash Speicher F ist noch ein externer Tampersensor ES mit der CPU verbunden, sowie mehrere Schnittstellen bzw. Interfaces IF (z.B. USB, Netzwerk etc.). Der Flash-Speicher F kann Startcode, Konfigurationsdaten und ein Dateisystem für den operativen Benutzermodus enthalten. Als Teil einer ersten Betriebsphase bzw. Start-Betriebsphase (die hier beispielhaft in Form eines (initialen) Secure-Bootvorgangs dargestellt ist) verwendet die erste Bootkomponente (z.B. CPU Boot ROM) einen eingebetteten öffentlichen Schlüssel (z.B. RSA), um eine digitale Signatur der nächsten Komponente (Bootloader) zu überprüfen. Nur wenn die Signaturprüfung erfolgreich ist, wird die Kontrolle über die CPU an den nächsten Teil Start-Betriebsphase (z.B. Bootloader) übergeben. Dieses Schema setzt der Bootloader anschließend fort.

Die genannte Sensor-Policy definiert die zulässigen Wertebereiche der Tampersensoren während der initialen Secure-Bootphase. Die zulässigen Wertebereiche können beispielsweise während der Entwicklungs- bzw. Testphase eines Gerätes in einer kontrollierten Umgebung ermittelt werden. Die daraus resultierende Sensor-Policy kann anschließend auf folgende Art und Weise auf das Gerät gebracht werden:
- Integration in das Firmware-Abbild. Hierbei muss die Sensor-Policy dann allerdings durch den Secure-Boot Vorgang zunächst auf Integrität und Authentizität geprüft werden, bevor sie als vertrauenswürdige Referenz angesehen werden kann (z.B. mittels in Fuses gebrannter Hash-Wert, um die Integrität zu prüfen). Eine Aktualisierung der Sensor-Policy würde zudem ein neues Firmware-Abbild erfordern.
- Speichern der Sensor-Policy auf einer dedizierten Partition in einem Dateisystem. Auch hier müsste die Sensor-Policy entsprechend signiert, bzw. ein Hash der Sensor-Policy in Fuses gebrannt, sein und vor allem gegen Manipulation geschützt sein. Es würde aber zur Aktualisierung nicht zwingend ein neues Firmware-Abbild nach sich ziehen. Zusätzlich müssten alle Bootkomponenten, welche die Sensor-Policy als Referenz-Daten verwenden, Zugriff auf das Dateisystem besitzen, bzw. dieses unterstützen.
- Eine weitere Möglichkeit ist das Programmieren der Sensor-Policy in CPU-Fuses (eFuses). So könnten z.B. die Schwellwerte einzelner Tampersensoren fest in die Fuses vor der Auslieferung des Gerätes, bzw. vor dem einbetten in das finale technische Gerät, eingebrannt werden. Da diese unveränderbar sind, müssen diese nicht auf Integrität oder Authentizität geprüft werden. Zur Aktualisierung können spezielle Fuses zur Annullierung bestimmter Teile der Sensor-Policy vorgesehen sein. Diese können gesetzt und der neue Wert in weitere Fuses programmiert werden. Schreibzugriff auf die Fuses sollte privilegierten Prozessen vorbehalten sein.

Die Sensor-Policy ist, je nach Verwendung der erstellten Aufzeichnung (Log-Datei/Protokoll, hier: Secure Boot Log Einträge), nicht zwingend lokal auf dem Steuergerät notwendig. Es ist folgendes denkbar:
- Erkennung von Manipulationen: Der Secure Boot Log kann entweder direkt bei der Erstellung eines Log-Eintrags oder zu einem späteren Zeitpunkt verwendet werden, um eine mögliche Manipulation zu erkennen. Im ersten Fall ist eine lokale Sensor-Policy notwendig, um die aufgezeichneten Tampersensorwerte zu überprüfen. Dies kann beispielsweise einfache Vergleiche mit in der Sensor-Policy festgelegten Schwellwerten umfassen. Prinzipiell sind auch komplexere Schwellwert-Funktionen denkbar. Der vollständige Secure Boot Log kann allerdings auch zu einem späteren Zeitpunkt verwendet werden, um die Vertrauenswürdigkeit des Secure-Bootvorgangs zu beurteilen. Dies kann z.B. von einem lokalen, auf dem Steuergerät laufenden Prozess erfolgen, oder durch eine mit dem Steuergerät verbundene Einheit (z.B. remote Cloud Server). Im letzteren Fall würde die Sensor-Policy außerhalb des Gerätes abgespeichert werden (z.B. auf dem Server).

- Reaktion auf Manipulationen: Der Secure Boot Log kann direkt auf dem Steuergerät, nach Erzeugen eines Eintrags, verwendet werden um im Falle einer erkannten Manipulation entsprechend der Sensor-Policy zu reagieren. Beispielsweise kann der Secure-Bootvorgang komplett unterbrochen werden, oder das Gerät bootet in einen speziellen "fail-safe" oder Diagnose-Betriebsmodus. Zusätzlich können auch externe Signale zur Bekanntgabe einer erkannten Manipulation gesetzt werde, z.B. Setzen einer Warnlampe.

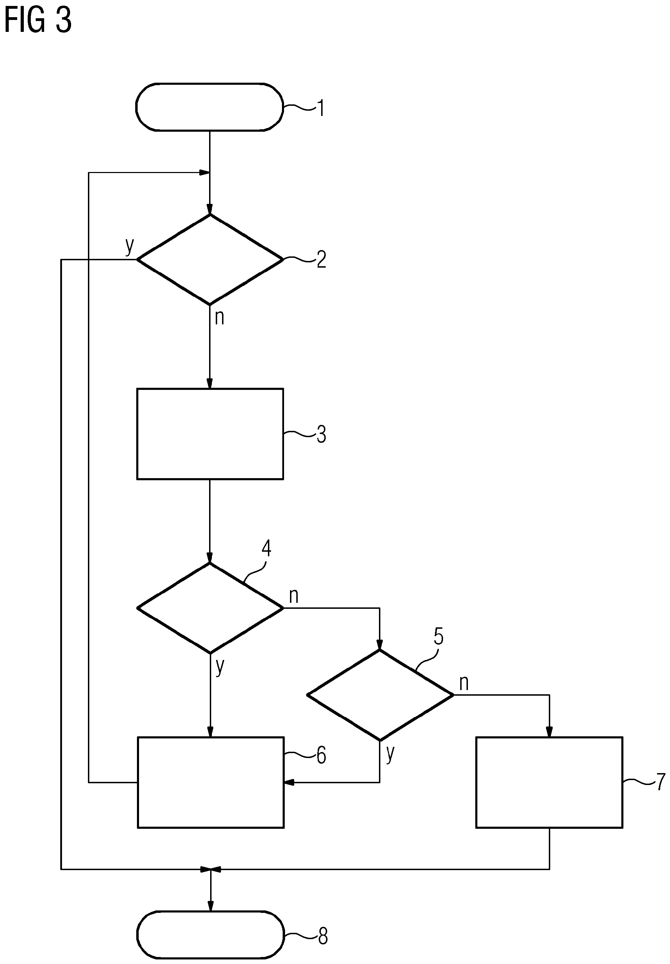

Gemäß Figur 2 werden parallel zu den regulären Überprüfungen während des Secure Boots SB die von den Tampersensoren S erfassten Betriebsdaten (intern z.B. VS und CM, extern z.B. ES) ausgewertet und mit Referenz-Daten, die erlaubte Werten umfassen, die in der Sensoren-Policy definiert sind, verglichen (siehe Fig 3 Schritt 4). Weicht einer der zu überprüfenden Werte ab (z.B. Überschreitung/Unterschreitung eines Schwellwert (Abweichung über ein vorgebbaren Grad hinaus), "Verlassen" eines Intervalls, zu hohe Fluktuation), so kann von einer möglichen Manipulation ausgegangen werden. Es gibt entsprechende Möglichkeiten zur Konfiguration der Sensoren-Policy, sowie der Reaktion z.B. durch einen Alarm A auf das Erkennen einer Abweichung. Nach jeder Secure Boot Stufe Stl, St2, St3 entsteht ein entsprechender Teil-Log/Teil-Protokoll (z.B. L1 nach der Überprüfung des Bootloaders in Stufe St1). Die dadurch erzeugten Secure-Boot-Logs L1+L2+L3 können anschließend wie folgt verwendet werden.

In einer Ausführungsform wird der Secure-Boot-Log kryptographisch geschützt erstellt, z.B. als laufende kryptographische Prüfsumme (laufender Hash). Dies erlaubt nach Erstellen der finalen Prüfsumme einen einfachen Vergleich mit einer Referenzprüfsumme. Allerdings müssen die erfassten Sensorwerte vor der Anwendung des Hash des Logs auf ein Intervall abgebildet werden, da sonst minimale Veränderungen in den Werten zwischen zwei Bootstufen zu unterschiedlichen Prüfsummen führen würden. Stimmt die Prüfsumme nicht mit dem Referenz-Datum überein, so kann von einer Manipulation ausgegangen werden. Zudem kann nach jedem Schritt des Secure Boot Vorgangs bzw. Phase die aktuelle Prüfsumme überprüft werden.

In einer weiteren Ausführungsform entspricht der Secure Boot Log einem Protokoll/Aufzeichnung der Sensorwerte für die einzelnen Secure Boot Stufen einer Start-Betriebsphase (z.B. Überprüfung des Bootloaders, Überprüfung des Kernels, etc.). Teile der kryptographisch aufgezeichneten und/oder gespeicherten Betriebsdaten oder die Gesamtheit der kryptographisch aufgezeichneten und/oder gespeicherten Betriebsdaten können anschließend an eine Secure Boot Stufe, oder im Anschluss an den vollständigen Secure Boot Vorgang vollständig auf Gültigkeit übergeprüft werden.

Ist einer der Tampersensorwerte außerhalb des zugelassenen Intervalls, kann der Bootvorgang gestoppt oder eine anderweitige Folgemaßnahme bzw. Reaktion eingeleitet werden. Im Gegensatz zu der vorhergehenden Ausführungsform müssen die Sensorwerte nicht zunächst auf feste Intervalle abgebildet, sondern können direkt zur Auswertung verwendet werden.

In einer weiteren Ausführungsform kann eine optionale kryptographische Signatur des finalen Secure Boot Logs durch eine entsprechende Komponente der CPU erzeugt werden. Der private Signaturschlüssel kann dabei z.B. fest in die Fuses der CPU programmiert werden und dem Rest des Steuergeräts unzugänglich gemacht werden. Das Signieren des Secure Boot Logs kann somit als für eine Softwarekomponente bereitgestellten Service der CPU verstanden werden. Im Anschluss kann der Secure Boot Log, sowie die Signatur, von einer weiteren Stelle bzw. Entität (z.B. remote Server) ausgewertet und als Basis für die Vertrauenswürdigkeit des Gerätes verwendet werden.

In einer weiteren Ausführungsform kann der Secure Boot Log im Anschluss des Bootvorgangs von einer vertrauenswürdigen Komponente auf dem Gerät selbst, z.B. trusted Applikation in einer ARM TrustZone, ausgewertet werden. Werden keine Manipulationen festgestellt, schaltet die trusted Applikation z.B. weitere Services, wie einen Geräteschlüsselspeicher, frei.

Es ist zweckmäßig, wenn während des Secure Boot Vorgangs die aktuellen Werte der konfigurierten Tampersensoren (Chipintern oder extern) über die Dauer der für das Secure Boot relevanten Operationen (z.B. Signaturprüfung) mitprotokolliert bzw. aufgezeichnet werden. Vorzugsweise werden den Erfassungen/Messungen Zeitstempel zugeordnet, sodass das Zeitverhalten des Secure Boot Vorgangs analysiert werden kann. Dazu kann eine Zeitreihe erzeugt werden. Alternativ können auch noch ein Maximalwert und ein Minimalwert oder statistische Parameter wie Mittelwert, Varianz, etc. ermittelt werden. Weiterhin werden vorzugsweise kryptographische Operationen mitprotokolliert, d.h. die ermittelten Hash-Werte geladener Firmware und die erfolgten Signaturprüfungen. Weiterhin kann während des Bootvorgangs ein Physical Fingerprint des Secure-Bootvorgangs ermittelt werden (insbesondere ein Stromverbrauchsprofil).

Diese Secure-Bootvorgangs-Überwachung kann während des gesamten Bootvorgangs durchgehend oder gezielt während den Zeitabschnitten, während denen sicherheitskritische Integritäts- bzw. Authentizitätsprüfungen des Secure Boots durchgeführt werden, erfolgen.

Das Resultat ist eine Auflistung der Werte bzw. Wertebereiche der Tampersensoren über die Dauer der jeweiligen Überprüfungen, z.B. Überprüfungen des Bootloaders, Überprüfung des Kernels in einem Secure Boot Log. Ggf. können kryptographische Operationen eines Secure Boot Vorgangs sowie ein physikalischer Bootvorgangs-Fingerprint in ein Secure Boot Log aufgenommen werden.

Dieser Secure Boot Log kann anschließend in einem Dateisystem oder einer geschützten Umgebung (z.B. Hardware Security Modul, spezieller geschützter Speicherbereich, etc.) abgelegt werden. Sie kann durch eine kryptographische Prüfsumme vor Manipulation geschützt werden. Dies ermöglicht, dass nachträglich, d.h. nach erfolgtem Startvorgang, überprüft werden kann, ob während des Startvorgangs eine zulässige Systemumgebung vorgelegen hat. D.h. dass in einer nachfolgenden Secure-Bootphase oder in der nachfolgenden zweiten Betriebsphase, insbesondere ein operativer bzw. regulären Betrieb, die während einer zurückliegenden Secure Boot Phase aufgetretenen Tampersensormesswerte und kryptographischen Operationen überprüft werden können. Dies kann auf der CPU selbst, auf einem separaten Secure Element (z.B. Crypto Controller) oder in einem Backend-System erfolgen.

Gemäß Figur 3 wird das erfindungsgemäße Betriebsverfahren anhand eines Ablaufdiagramms, das mit Schritten 1 bis 8 gekennzeichnet ist, näher beschrieben.

Zunächst wird in Schritt 2 nach dem Startvorgang 1 ermittelt, ob die Secure Boot Stufe abgeschlossen wurde, unabhängig davon, ob sie erfolgreich war oder nicht. Ist dies nicht der Fall, werden in Schritt 3 die aktuellen Werte aller in der Policy konfigurierten Sensoren erfasst und mit der Secure Boot Policy in Schritt 4 verglichen. Befinden sich alle in einem erlaubten Intervall, wird der Log in Schritt 6 für die aktuelle Stufe erweitert und der Prozess beginnt von neuem. Ist einer oder mehrere der Werte außerhalb des erlaubten Intervalls, handelt es sich möglicherweise um eine Manipulation. Ist der Vorgang in Schritt 5 nur im "Audit"/"non-enforcing" Modus konfiguriert, so wird die Abweichung entsprechend lediglich geloggt und der Prozess beginnt von vorne. Ist der Mechanismus in Schritt 5 im "Enforcing" Modus, so wird eine Folgemaßnahme entsprechend der in der Secure Boot Policy konfigurierte Reaktion in Schritt 7 mittels einer Nachricht eingeleitet (z.B. Bootvorgang anhalten, spezieller Diagnose-Modus). An dieser Stelle kann die Reaktion auch in Verbindung mit einem vorab definierten Schweregrad der erkannten Abweichung ermittelt werden. Schritt 8 kennzeichnet das Ende des oben erläuterten Vorgehens.

In der Policy können zudem, je nach Tampersensor der eine mögliche Manipulation aufzeigt, Schweregrade vergeben werden. Beispielsweise kann eine leicht erhöhte Temperatur als weniger schwerwiegend eingestuft werden, als eine Meldung des geräteexternen Tampersensors ES. Je nach Einsatzgebiet des Gerätes können zudem Schwankungen oder Schwellwertüberschreitungen bestimmter Sensoren Teil des erwarteten Verhaltens sein. Mit der Möglichkeit, die Werte in Schweregrade zu kategorisieren, bzw. diese zu gewichten, bietet sich die Möglichkeit, das Verfahren möglichst robust gegenüber Störungen und anderen nicht-bösartigen Einflüssen zu gestalten. Beispielsweise kann die Policy auch so definiert werden, dass einige Tampersensoren komplett ignoriert werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Vorrichtung (V) zum Überprüfen von Betriebsdaten einer gesicherten Start-Betriebsphase eines insbesondere in einer industriellen Anlagenumgebung verwendbaren Gerätes aufweisend:
- eine Erfassungseinheit (ES, TS, VS, CM), die dazu ausgelegt ist, die Betriebsdaten während der gesicherten Start-Betriebsphase zu erfassen und,
- eine Aufzeichnungseinheit (SB), die dazu ausgelegt ist, diese Betriebsdaten aufzuzeichnen,
- eine Vergleichseinheit, die dazu ausgelegt ist, während der Start-Betriebsphase den Inhalt der erfassten Betriebsdaten mit dem Inhalt von vorgebbaren ersten Referenz-Daten zu vergleichen und bei Zulässigkeit des Vergleichsergebnisses eine zweite Betriebsphase zu aktivieren, und
- eine weitere oder dieselbe Vergleichseinheit, die dazu ausgelegt ist, den Inhalt dieser aufgezeichneten Betriebsdaten mit dem Inhalt von vorgebbaren zweiten Referenz-Daten während der zweiten Betriebsphase zu vergleichen, und
- eine Ausgabeeinheit, die dazu ausgelegt ist, eine zumindest eine Folgemaßnahme einleitenden Nachricht abhängig vom Vergleichsergebnis während der Start-Betriebsphase und/oder vom Vergleichsergebnis während der zweiten Betriebsphase auszugeben.

2. Vorrichtung nach dem vorhergehenden Anspruch **dadurch gekennzeichnet, dass**, wenn das Vergleichsergebnis eine Abweichung der aufgezeichneten Daten mit den Referenz-Daten repräsentiert, die Nachricht einen Alarm, einen Neustart, ein Löschen von Daten, ein Signal eines Anzeigeelements und/oder ein Herstellen oder Unterbrechen einer elektrischen Verbindung als Folgemaßnahme einleiten kann.

3. Vorrichtung nach dem vorhergehenden Anspruch 1 oder 2 **dadurch gekennzeichnet, dass**, wenn das Vergleichsergebnis eine Übereinstimmung der aufgezeichneten Daten mit den zweiten Referenz-Daten repräsentiert, eine Bestätigungsnachricht ausgegeben werden kann.

4. Vorrichtung nach einem der vorhergehenden Ansprüche **dadurch gekennzeichnet, dass** die erfassten Betriebsdaten Sicherheitsbetriebsdaten umfassen.

5. Vorrichtung nach einem der vorhergehenden Ansprüche, **dadurch gekennzeichnet, dass** die erfassten Betriebsdaten kryptographisch geschützt aufgezeichnet und/oder gespeichert sind.

6. Vorrichtung nach dem vorhergehenden Anspruch, **dadurch gekennzeichnet, dass** Teile der kryptographisch geschützt aufgezeichneten und/oder gespeicherten Betriebsdaten oder die kryptographisch geschützt aufgezeichneten und/oder gespeicherten Betriebsdaten vollständig auf Gültigkeit geprüft werden.

7. Vorrichtung nach dem vorhergehenden Anspruch, **dadurch gekennzeichnet, dass** die aufgezeichneten und/oder gespeicherten Betriebsdaten als Ganzes kryptographisch durch eine Signatur abgesichert werden, welche von einer Recheneinheit der Vorrichtung (V) erstellbar ist oder erstellt wird.

8. Vorrichtung nach dem vorhergehenden Anspruch, **dadurch gekennzeichnet, dass** der private Signaturschlüssel fest verdrahtet oder einmalig konfigurierbar in der Recheneinheit hinterlegt ist.

9. Betriebsverfahren zum Überprüfen von Betriebsdaten einer gesicherten Start-Betriebsphase eines insbesondere in einer industriellen Anlagenumgebung verwendbaren Gerätes aufweisend folgende Schritte:
a) Erfassen (1) der Betriebsdaten während der gesicherten Start-Betriebsphase,
b) Aufzeichnen dieser Betriebsdaten (6),
c) Vergleichen (4) während der Start-Betriebsphase des Inhalts der erfassten Betriebsdaten mit dem Inhalt von vorgebbaren ersten Referenz-Daten und Aktivieren einer zweiten Betriebsphase bei Zulässigkeit des Vergleichsergebnisses,
d) Vergleichen (5) des Inhalts dieser aufgezeichneten Betriebsdaten mit dem Inhalt von vorgebbaren zweiten Referenz-Daten während der zweiten Betriebsphase, und
e) Ausgeben einer zumindest eine Folgemaßnahme einleitenden Nachricht (7) abhängig vom Vergleichsergebnis während der Start-Betriebsphase und/oder vom Vergleichsergebnis während der zweiten Betriebsphase.

10. Betriebsverfahren nach dem vorhergehenden Anspruch, **dadurch gekennzeichnet, dass** die Schritte a) bis c) wiederholbar sind oder wiederholt werden.
